(19) Europäisches Patentamt
European Patent Office
Office européen des brevets

(11) EP 2 699 616 B1

(12) **EUROPEAN PATENT SPECIFICATION**

(45) Date of publication and mention of the grant of the patent:
**14.10.2015 Bulletin 2015/42**

(21) Application number: **12720550.8**

(22) Date of filing: **19.04.2012**

(51) Int Cl.:
***C08G 18/10*** *(2006.01)* ***C08G 18/48*** *(2006.01)*
***C08G 18/66*** *(2006.01)* ***G02B 1/04*** *(2006.01)*

(86) International application number:
**PCT/GB2012/000390**

(87) International publication number:
**WO 2012/143694 (26.10.2012 Gazette 2012/43)**

(54) **POLYMER FOR CONTACT LENSES**
POLYMER FÜR KONTAKTLINSEN
POLYMÈRE POUR LENTILLES DE CONTACT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.04.2011 GB 201106778**

(43) Date of publication of application:
**26.02.2014 Bulletin 2014/09**

(73) Proprietor: **Ocutec Limited**
**Bellshill ML4 3NX (GB)**

(72) Inventors:
- **ABDUL, Rashid**
**Bellshill ML4 3NX (GB)**
- **GRAHAM, Neil, Bonnette**
**Bellshill ML4 3NX (GB)**
- **BOWERS, Roderick**
**Bellshill ML4 3NX (GB)**
- **TIPTON, Wade**
**Bellshill ML4 3NX (GB)**
- **FRASER, John**
**Bellshill ML4 3NX (GB)**

(74) Representative: **D'Arcy, Julia**
**Harrison IP**
**1st Floor**
**Box Tree House**
**Northminster Business Park**
**Northfield Lane**
**York, YO26 6QU (GB)**

(56) References cited:
**WO-A1-98/33834**
**WO-A2-02/00749**
**WO-A2-2011/051690**
**WO-A2-2012/056195**
**US-A1- 2005 209 428**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 699 616 B1

## Description

The present invention relates to contact lenses formed from poly(ethylene glycol), PEG based polyurethane polymers. The invention also relates to a process for preparing such materials, which can desirably and preferably be prepared in the complete absence of solvents.

## Background to the Invention

Soft contact lenses offer a viable alternative to spectacles for the correction of visual defects such as myopia, hypermetropia and astigmatism. Early hydrogel lenses are derived almost exclusively from hydrophilic monomers such as 2-hydroxyethyl methacrylate (HEMA). Although these lenses provided some comfort, they did not provide sufficient oxygen permeability to prevent problems associated with corneal hypoxia. Attempts to address this problem included copolymerising HEMA with hydrophilic monomers such as methacrylic acid and N-vinyl pyrrolidone. Although these polymers increased the level of oxygen permeability, the incorporation of these comonomers also leads to problems such as protein and lipid deposition, corneal desiccation, staining and lens dehydration.

More recently, a new generation of polymers has been developed to further increase the level of oxygen. These materials are based on the copolymerisation of silicone methacylates with hydrophilic comonomers. The lenses produced from these materials were originally designed for extended wear, though daily wear products also exist now. Although successful in further increasing the oxygen permeability, these new materials still suffer from limitations such as lipid binding and dryness, all of which decrease lens on eye comfort.

There is therefore still a need for new contact lens polymers, which offer sufficient oxygen levels for normal corneal metabolism during daily wear and for extended wear, and which provide a high level of comfort throughout the day.

One class of polymers which holds considerable promise for novel contact lens materials are PEG based polyurethanes.

Urethane chemistries have also been widely investigated in the field of biomedical devices. For example, US 3,786,034 discloses hard, hydrophilic polyurethane materials formed from reacting a specific polyol with a polyfunctional isocyanate. US 3,821,186 teaches similar such materials. Likewise, US 4,136,250 teaches a polymer formed by reacting a high molecular weight polydimethyl siloxane diol with 2 mole equivalents of isophorone di-isocyanate and then reacting with excess hydroxyl-containing monomers. Further urethane copolymers are disclosed in US 4,454,309 and US 4,359,553.

US 6,930,196 discloses polyurethane hydrogel contact lenses prepared from prepolymers made by reacting (a) at least one multifunctional compound; (b) at least one di-isocyanate; and (c) at least one diol. The prepolymers so formed are then reacted with excess water to form a hydrogel polymer suitable for use as a contact lens.

US 4,644,033 discloses a polyurethane hydrogel formed from the reaction of a polyoxyethylene and a polyfunctional isocyanate in a non-aqueous solvent. The materials can be molded into contact lenses.

US 5,932,200 discloses polyurethane formed from reacting a diol component and an organic di-isocyanate with critical selection of the amount of water in the reaction mixture and the diol component. The polyurethane is in the form of a gel that has applications in burn/wound care dressings and as surgical implants.

US 4,885,966 and US 5,175,229 disclose hydrophilic polymeric soft contact lenses prepared from prepolymers that are isocyanate-capped oxyethylene-based diols or polyols having a molecular weight of about 7000 to 30,000, wherein essentially all of the OH groups are capped with isocyanate. The prepolymers are hydrated to form polyurea-polyurethane polymers that are characterised by having a non-ionic surface which is resistant to nonspecific protein adsorption.

US2005/209428 discloses hair fixative polyurethane compositions formed from a mixture comprising polypropylene glycol, TMP, poly(ethylene glycol) and a di-isocyanate. WO02/00749 discloses polyurethane hydrogel contact lenses formed from a two-shot process.

WO98/33834 relates to moulded ophthalmic articles, especially contact lenses, which are obtainable by crosslinking a prepolymer which is the copolymerisation product of (a) at least one polyalkylene glycol of the formula (1): $HO-(CH_2-CH_2-O)_n-(CHY^1-CHY^2-O)_m-(CHY^3-CHY^4-O)_p-H$ or (1'): $HO-[(CH_2-CH_2-CH_2-CH_2-O)]_g-H$, (b) at least one polyhydroxy compound selected from the group consisting of (i) a linear or branched aliphatic polyhydroxy compound of the formula (2): $R^1-(OH-)x$ or a polyether polyol or polyester polyol derived therefrom, and (ii) a cycloaliphatic polyol selected from the groups polyhydroxy-C5-C8-cycloalkane and unsubstituted mono- or disaccharide, (c) at least one di- or polyisocyanate of the formula (3): $R_2-(NCO)_y$, (d) at least one ethylenically unsaturated monoisocyanate of formula (4), or an ethylenically unsaturated acid halide of formula (4'), and optionally further copolymerisable monomers, wherein the variables have the significances given in the claims, in the absence or presence of an additional vinylic comonomer.

WO2011/051690 relates to a polyurethane polymer prepared from a mixture comprising: (a) at least one polyol comprising at least three OH-terminated polyoxyalkylene group linked to a central linking unit (b) at least one di-or poly-isocyanate; and (c) optionally at least one OH-terminated chain extender.

WO2012/056195 relates to a polyurethane polymer composition prepared by reacting a mixture comprising: a} at least one poly (ethylene glycol), and either b) at least one poly-isocyanate, having a functionality greater than 2 or c) at least one di-isocyanate and at least one polyol or at least one macropolyol having a functionality greater than 2, wherein the polyol or macropolyol is present at an amount of 0.1 to 9 wt % of the mixture.

It is well known anecdotally that poly(ethylene glycol) based polyurethane copolymers are associated with poor storage stability. Known poly(ethylene glycol) based polyurethanes generally do not consistently maintain their properties after 6 months storage. The stability of polymers forming medical devices is clearly paramount. The properties of materials used in the manufacture of medical devices must be maintained upon extended periods of storage. The properties of such materials must be predictable and consistent. Materials having low and/or inconsistent storage stability are not suitable for use in the manufacture of medical devices such as contact lenses, regardless of any other promising properties.

The present invention seeks to provide contact lenses formed from new polyoxyethylene based polyurethane-based materials. Ideally, the polyoxyethylene polyurethane-based materials of the invention exhibit exemplary physical properties.

According to a first aspect of the present invention there is provided a contact lens formed from a polyurethane polymer composition prepared by reacting a mixture comprising:

a) 30 to 70 wt% of at least one poly(ethylene glycol) having a number average molecular weight of 2000 to 12000,
b) 10 to 70 wt% of at least one polyoxyalkylene diol selected from the group consisting of PPG and a copolymer of ethylene oxide and propylene oxide),
c) at least one di- or poly-isocyanate,
d) at least one polyol or macropolyol having a functionality greater than 2, or a mixture of such polyols or macropolyols having a functionality of greater than 2,
e) an additional compound comprising at least one hydroxyl group and at least one primary or secondary amine group.

A further aspect of the present invention relates to a process for preparing a contact lens comprising the steps of:

i) preparing a mixture of:

a. 30 to 70 wt% of at least one poly(ethylene glycol) having a number average molecular weight of 2000 to 12000,
b. 10 to 70 wt% of at least one polyoxyalkylene diol (typically selected from the group consisting of PPG or and a copolymer of ethylene oxide and propylene oxide),
c. at least one di- or poly-isocyanate, and
d. at least one polyol or macropolyol, said macropolyol having a functionality greater than 2, or a mixture of such polyols or macropolyols having a functionality of greater than 2 and,
e. an additional compound comprising at least one hydroxyl group and at least one primary or secondary amine group;

ii) dispensing the reaction mixture formed in step i) into a contact lens mould;
iii) allowing the reaction mixture to react and cure (generally with the assistance with energy, in particular thermal energy or other means of radiation);
iv) removing the contact lens from the mould; and
v) hydrating the contact lens, optionally in the presence of a surface active agent, such as a polysorbate compound or poloxamer or mixture thereof.

**Definitions**

"Polyfunctional" is generally used to refer to a molecule, or a mixture of molecules having more than 2 functional groups that are capable of reacting in the system.

The di-isocyanate has a functionality of two, the poly-isocyanate has a functionality of greater than two where the "functionality" refers to the number of NCO groups present in the di- or poly-isocyanate compound.

The "cross-linking compound" provides additional covalent bonds between polyurethane chains. Generally the cross-linking agent reacts with the NCO groups of the di- or poly-isocyanate.

"DK" is a measure of the oxygen permeability of a material provided in Barrer units where 1 Barrer = $10^{-11}$ $cm^2$.ml.mmHg.

The term "tertiary hydrogen atom" is used to refer to a hydrogen atom attached to a carbon atom having three substituents other than hydrogen where one of the three substituents is oxygen.

The term "hydrogel" is used herein to refer to a polymer comprising 10 wt% or more water. A hydrogel in an

aqueous medium will absorb water and retain its original dry shape but it will be enlarged. It will not dissolve in water to form a fluid solution unless it is significantly degraded.

The term "xerogel" is used herein to refer to a polymeric material which may form a hydrogel upon contact with sufficient water. Generally a xerogel is dry and comprises less than 5 wt% water.

The term "substantially anhydrous" is used herein to refer to conditions in which the amount of water is sufficiently low so as to produce a polyurethane backbone that is substantially free from urea groups. Preferably the amount of water in the reactant mixture is less than about 0.3 wt. %, more preferably less than about 0.1 wt. %, even more preferably less than about 0.05 wt. %.

Polyol is referred herein as a compound having more than 2 available hydroxyl groups. Polyols generally have a molecular weight less than or equal to 1000.

Macropolyol is generally used to refer to a compound having more than 2 available hydroxyl groups linked to polyoxyethylene and/or polyoxypropylene homo or copolymer and generally has a molecular weight greater than 1000.

"RCM" or "reaction cast molding" is used to refer to molding techniques which involve the steps of mixing the reactants together, dispensing the reactant mixture into a mold and allowing the reactant mixture to react and cure (generally with the assistance of energy, in particular thermal energy or radiation).

The term "chain extender" is typically used to refer to a low molecular weight difunctional monomer (typically but not exclusively of the order of $1000 gmol^{-1}$

**Polymer Composition**

As noted above, the present invention provides a contact lens formed from a polyurethane polymer composition prepared by reacting a mixture comprising:

a) 30 to 70 wt% of at least one poly(ethylene glycol) having a number average molecular weight of 2000 to 12000,
b) 10 to 70 wt% of at least one polyoxyalkylene diol selected from the group consisting of PPG and a copolymer of ethylene oxide and propylene oxide,
c) at least one di- or poly-isocyanate,
d) at least one polyol or macropolyol having a functionality greater than 2, or a mixture of such polyols or macropolyols having a functionality of greater than 2,
e) an additional compound comprising at least one hydroxyl group and at least one primary or secondary amine group.

It is well known anecdotally that PEG based polymers substantially fail because of poor storage stability. No solution to this problem has currently been proposed. This has resulted in the lack of commercialisation of PEG polymer contact lenses which have other very promising qualities (previously reported in patents such as US 6,930,196). The present invention provides an effective solution to the stability problem, and represents a major contribution to the knowledge in the art towards utilising PEG composition in the field of contact lenses.

The properties of a contact lens of the present invention are extremely promising.

Contact lenses of the present invention generally have a water content of 50 to 70 wt %, typically around 60 wt %, and this is considered desirable in terms of the industry standard. The oxygen permeability of contact lenses of the present invention is generally at least as high, or higher than most hydrogel contact lenses. The DK value of the contact lenses of the present invention is typically 20 to 40 Barrer, generally 25 to 35 Barrer, suitably around 30 Barrer. The tensile properties of the lenses are also good, with the modulus typically 0.4 to 0.6 MPa, generally around 0.5 MPa.

**Poly(ethylene glycol)**

The present invention involves the use of at least one poly(ethylene glycol) (PEG). The PEG is preferably a pharmaceutical grade poly(ethylene glycol) with a molecular weight of approximately as described below. PEG is a main functional constituent of the composition used to form the contact lenses of the present invention. In addition, PEG also plays a key role in controlling the hydrophilicity (affinity for water) of the surface of the contact lenses, which in turn governs the biocompatibility of the contact lenses with biological tissue and fluids.

The PEG has a number average molecular weight of 2000 to 12000, generally 2000 to 10000, preferably 3000 to 9000, advantageously 2000 to 8000.

According to one embodiment the PEG compound has a molecular weight of about 3000 to about 7000. According to one aspect of the present invention the PEG has a molecular weight of 5000 to 6000, suitably 5500 to 6000. Preferably the PEG compound has a molecular weight of around 5527 +/- 250, or around 3880+/- 250.

In one preferred embodiment, the PEG is PEG 6000 (where the numbers represent the number average molecular weight).

According to one embodiment of the present invention, all PEG compounds used to form the composition of

the present invention have a molecular weight of 5000 to 6000, suitably 5500 to 6000.

Alternatively, the composition of the present invention may include a PEG compound as described above and a second PEG compound which may have a molecular weight higher or lower than that described above, typically a second PEG compound having a molecular weight lower than that described above.

According to a further embodiment of the present invention, the composition comprises a first low molecular weight PEG compound (LMW PEG) and a second high molecular weight PEG compound (HMW PEG). Suitably the LMW PEG has molecular weight less than 4500, typically from about 3000 to about 4000, generally 3500 to 4000. Suitably the HMW PEG has molecular weight greater than 7000, typically from about 7500 to about 8500, generally 8000 to 8500. According to one embodiment, the composition comprises a LMW PEG compound having a molecular weight of 3500 to 4000 and a HMW PEG compound having a molecular weight of 8000 to 8500. Preferably the HMW PEG compound has a molecular weight of 8095 +/- 250.

Preferably, the reactant mixture comprises from about 10 to about 95 wt % PEG, typically from about 30 to about 70 wt % PEG.

The contact lens of the present invention is formed from a polyurethane composition prepared by reacting a mixture comprising 30 to 70 wt% of at least one PEG having a number average molecular weight of 2000 to 12000. According to one embodiment the reactant mixture comprises from about 10 to about 70 wt % PEG having a number average molecular weight of 3000 to 9000, generally 4000 to 7000, typically from about 30 to about 70 wt % PEG having a number average molecular weight of 4000 to 7000.

Alternatively or additionally the reactant mixture may comprise from about 10 to about 70 wt % PEG having a number average molecular weight of 2000 to 4500, typically from about 30 to about 70 wt % PEG having a number average molecular weight of 2000 to 4500.

According to one embodiment, the reactant mixture may comprise 30 to 70 wt% of a first PEG compound having a number average molecular weight of 2000 to 4500 or less and 30 to 70 wt% of a second PEG compound having a number average molecular weight of 7000 to 12000.

According to one embodiment of the present invention, the second PEG is selected from the group consisting of PEG 6000, PEG 3500 and PEG 8000 (where the numbers represent the number average molecular weight).

**Polyoxyalkylene diol**

The contact lens of the present invention is formed from a polyurethane polymer composition prepared by reacting a mixture comprising 10 to 70 wt% of at least on polyoxyalkylene diol selected from the group consisting of PPG and a copolymer of ethylene oxide and propylene oxide. The polyoxyalkylene diol is generally poly(propylene glycol) (PPG) of which one of the many possible structures is given below.

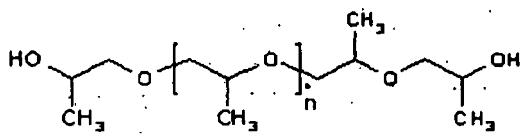

n = 1-20, more preferably 4-10 even more preferably 4-5

PPG

Poly(propylene glycol) (PPG) is a colourless, viscous liquid. The main function of PPG is to dictate the mechanical properties of the lens and is used to provide the right stiffness (modulus) and tensile properties so that the contact lens can be handled by the patient and the lens will be comfortable to wear. Accordingly, increasing the proportion of PPG in the reactant mixture increases the modulus of the resultant composition. If the modulus of the resultant composition is too high, an article formed therefrom will be uncomfortable to wear and the risk of infection will be increased. If the modulus of the resultant composition is too low, an article formed from the resultant composition will be associated with poor storage stability and poor handlability. The proportion of the polyoxyalkylene diol must be controlled to ensure that the properties of a contact lens formed from the resultant composition are acceptable.

Alternatively, the polyoxyalkylene diol may be a copolymer of ethylene oxide and propylene oxide, generally comprising terminal hydroxyl groups. According to one embodiment, the polyoxyalkylene diol is a copolymer of poly(ethylene glycol) and poly(propylene glycol), generally comprising terminal hydroxyl groups.

The reactant mixture comprises from 10 to 70 wt % polyoxyalkylene diol selected from the group consisting of PPG and a copolymer of ethylene oxide and propylene oxide, generally from about 30 to about 70 wt % of the polyoxyalkylene diol.

## Di- or Poly-isocyanate

The contact lens of the invention is formed from a polyurethane polymer composition prepared using at least one di-or poly-isocyanate. Preferably, the di- or poly-isocyanate is an aliphatic di- or poly-isocyanate. The main function of the di- or poly-isocyanate is to initiate and propagate the polymerisation reaction by reacting with hydroxyl groups of PEG and PPG, as well as the polyols/macropolyols and the additional compound.

Where a poly-isocyanate is used, it has a functionality of greater than 2, generally 3, 4 or 5, advantageously 3 or 4. The combination of both the polyol and poly-isocyanate may be used to obtain the optimal extent of crosslinking required for a contact lens of the present invention.

Suitable poly-isocyanates for use in the compositions used to form the contact lenses of the present invention include, tri-functional trimer (isocyanurate) of isophorone diisocyanate, trifunctional trimer (isocyanurate) of hexamethylene diisocyanate and polymeric 4,4'-diphenylmethane diisocyanate.

More preferably, the di- or poly-isocyanate is aliphatic and is free from aromatic units.

Preferably, the di- or poly-isocyanate is liquid at ambient temperature.

In one preferred embodiment, the contact lens of the invention is prepared using at least one di-isocyanate.

Preferably, the di-isocyanate is of the formula OCN-$R_1$-NCO, wherein $R_1$ is a linear or branched $C_2$-$C_{18}$-alkylene, an unsubstituted or $C_1$-$C_4$-alkyl-substituted or $C_1$-$C_4$-alkoxy-substituted $C_6$-$C_{10}$-arylene, a $C_7$-$C_{18}$-aralkylene, a $C_6$-$C_{10}$-arylene-$C_1$-$C_2$-alkylene-$C_6$-$C_{10}$-arylene, a $C_3$-$C_8$-cycloalkylene, a $C_3$-$C_8$-cycloalkylene-$C_1$-$C_6$-alkylene, a $C_3$-$C_8$-cycloalkylene-$C_1$-$C_6$--alkylene-$C_3$-$C_8$--cycloalkylene or a $C_1$-$C_6$-alkylene-$C_3$-$C_8$--cycloalkylene-$C_1$-$C_6$-alkylene.

Examples of suitable di-isocyanates and preferred di-isocyanates include methylene dicyclohexyl diisocyanate,, isophorone diisocyanate, toluene-2,4 diisocyanate, toluene-2,6-diisocyanate, mixtures of toluene-2,4 and 2,6-diisocyanates, ethylene diisocyanate, ethylidene diisocyanate, propylene-1,2-diisocyanate, cyclohexylene-1,2-diisocyanate, cyclohexylene-1,4-diisocyanate, m-phenylene diisocyanate, 4,4"-biphenylene diisocyanate, 3,3"-dichloro4,4"-biphenylene diisocyanate, 3,3";-diphenyl-4,4";-biphenylene diisocyanate, 1,6-hexamethylene diisocyanate, m-phenylene diisocyanate 1,4-tetramethylene diisocyanate, 1,10-decamethylene diisocyanate, cumene-2,4-diisocyanate, 1,5-napthalene diisocyanate, 1,4-cyclohexylene diisocyanate, 2,5-fluorenediisocyanate, polymeric 4,4'-diphenylmethane diisocyanate. p-tetramethyl xylylene diisocyanate, p-phenylene diisocyante, 4-methoxy-1,3-phenylene diisocyante, 4- chloro-1,3-phenylene diisocyanate, 4-bromo-1,3-phenylene diisocyanate, 4-ethoxy-1,3-phenylene diisocyanate, 2,4-dimethyl-1,3-phenylene diisocyanate, 5,6-dimethyl-1,3-phenylene diisocyanate, 2,4-diisocyanatodiphenylether, 4,4"-diisocyanatodiphenylether, benzidine diisocyanate, 4,6-dimethyl-1,3-phenylene diisocyanate, 9,10-anthracene diisocyanate, 4,4'-diisocyanatodibenzyl, 3,3'- dimethyl-4,4'-diisocyanatodiphenylmethane, 2,6-dimethyl-4,4'-diisocyanatodiphenyl, 2,4-diisocyanatostilbene, 3,3'-dimethoxy-4,4'-diisocyanatodiphenyl, 1,4-anthracenediisocyanate, 2,5-fluorenediisocyanate, 1,8-naphthalene diisocyanate, 2,6-diisocyanatobenzfuran, xylene diisocyanate, m-tetramethyl xylylene diisocyanate or methylene dicyclohexyl diisocyanate.

The di-isocyanate is preferably an aliphatic di-isocyanate. Aliphatic di-isocyanates which are fluid at ambient temperatures are particularly preferred.

In one highly preferred embodiment, the di-isocyanate is Desmodur W (methylene bis (4,4'cyclohexyl isocyanate), molecular weight, MW = around 262.5).

Preferably, the di- or poly-isocyanate is used in an amount of from about 9 wt % to about 50 wt% of the reaction mixture, more preferably from about 20 wt % to about 35 wt %. The amount of di- or poly-isocyanate in any given composition can be adjusted to modify the relevant contact lens properties/attributes.

## Polyol/Macropolyol

The reactant mixture used to form the composition of the present invention comprises at least one polyol or macropolyol having a functionality of more than two, or a mixture of such polyols or macropolyols having an average functionality of greater than 2.

According to some embodiments of the present invention, the polyol/macropolyol may comprise tertiary hydrogen atoms (in particular, where the polyol is glycerol). Generally, where the polyols of the present invention comprise tertiary hydrogen atoms, they have only one tertiary hydrogen atom per molecule.

The hydroxyl groups of the polyol/macropolyol and the PEG compound react With the NCO groups of the di- or poly-isocyanate to form a polymer matrix. The proportion/concentration of the polyol/macropolyol used in the reactant mixture affects the resultant material properties of the polyurethane composition formed. In particular, in cases where there is enough isocyanate to react with all of the hydroxyl groups, the greater the concentration of any given polyol/macropolyol in the reactant mixture, the greater the degree of cross-linking, leading to an increased modulus of the polyurethane composition formed. The amount of polyol/macropolyol used depends on the extent of cross-link density required, and the resultant tensile properties required. Increasing the concentration of polyol/macropolyol increases the modulus and reduces the water content of the resultant composition. Generally the reaction mixture of the present

invention comprises 10 wt% or less polyol or macropolyol, typically 7 wt % or less, suitably 5 wt % or less.

The polyol or macropolyol, di- or poly-isocyanate, polyoxyalkylene diol, PEG (and optionally the additional compound) react to eventually form a polymer matrix.

According to one embodiment, the polyol has the structure of formula I:

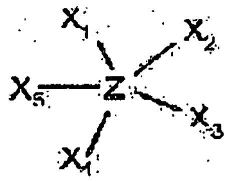

I

wherein at least three of $X_1$, $X_2$, $X_3$, $X_4$ and $X_5$ each independently comprise a terminal hydroxyl group with the remainder of $X_1$, $X_2$, $X_3$, $X_4$ and $X_5$ being independently H or absent, and Z is a central linking unit.

The polyol is a moiety comprising initiating hydroxyl groups attached to a central linking group, which is generally essentially hydrocarbon. These hydroxyl groups can each be used to polymerise a polyalkyleneoxide chain terminated by a hydroxyl group. The finally produced central linking moiety Z is generally devoid of active hydrogen atoms, that is hydrogen atoms which can initiate polymerisation. Z may contain groups that are inert to reaction with NCO groups or the alkylene oxides which are being polymerised or copolymerised. Generally the Z group has a molecular weight of 1000 or less.

Generally, at least three of $X_1$, $X_2$, $X_3$, $X_4$ and $X_5$ are each independently an OH-terminated polyoxyalkylene chain, preferably OH-terminated polyoxyethylene or polyoxypropylene chains.

The polyol of formula I is preferably a macropolyol. As used herein, the term "macropolyol" refers to a macromer bearing multiple OH groups.

As used herein, the term "macromer" (also referred to as "macromonomer") refers to a polymer or oligomer that has a functional group capable of participating in further polymerisation.

Generally 3, 4 or 5 of $X_1$, $X_2$, $X_3$, $X_4$ and $X_5$ comprise a terminal hydroxyl group.

According to one embodiment one or more of $X_1$, $X_2$, $X_3$, $X_4$ and $X_5$ independently represents a hydroxyl group or an OH terminated, optionally substituted, polyoxyalkylene chain. Typically 3, 4 or 5 of $X_1$, $X_2$, $X_3$, $X_4$ and $X_5$ independently represent a hydroxyl group or an OH terminated, optionally substituted, polyoxyalkylene chain.

Typically the polyoxyalkylene chain comprises up to 6 carbon atoms; generally the polyoxyalkylene chain comprises up to 3 carbon atoms.

The polyoxyalkylene chain may be substituted with one or more ether groups. According to one embodiment the polyoxyalkylene chain is not substituted.

One or more of $X_1$, $X_2$, $X_3$, $X_4$ and $X_5$ may independently represent an OH-terminated polyoxyalkylene chain wherein the polyoxyalkylene chain preferably does not comprise any tertiary hydrogen atoms. In particular 3, 4 or 5 of $X_1$, $X_2$, $X_3$, $X_4$ and $X_5$ may independently represent an OH-terminated polyoxyalkylene chain. Preferably, the polyoxyalkylene chains are polymers and/or co polymers of methylene oxide and/or propylene oxide in which the terminal hydroxyl groups may be primary or secondary hydroxyls, or a mixture thereof., More preferably, the polyoxyalkylene chains are OH-terminated polyoxyalkylene chains selected from polyoxyethylene and polyoxypropylene units or a mixture thereof. However copolymers of ethylene oxide and propylene oxide can also be used. Generally such copolymers comprise terminal hydroxyl groups.

Where the polyol of formula I is derived from the polymerization of ethylene or propylene oxides, the polyol will have the same number of terminal hydroxyl groups as the number of hydroxyl groups present in the compound from which it is derived.

Generally where one or more of $X_1$, $X_2$, $X_3$, $X_4$ and $X_5$ represents an OH-terminated polyoxyalkylene chain, in particular where 3, 4 or 5 of $X_1$, $X_2$, $X_3$, $X_4$ and $X_5$ represents an OH-terminated polyoxyalkylene chain, the polyol is maintained as a liquid at ambient temperature or temperatures slightly above (20 to 40 °C). Co-polymers of ethylene oxide with propylene oxide can be made which maintain flexibility at room temperature. Such a polyol preferably provides several advantages; in particular it is easier to handle and dispense at ambient temperature.

The polyol of formula I can be derived from various multi hydroxyl compounds e.g. a polyol comprising three polyoxyalkylene chains can be derived from the polymerization or copolymerization of ethylene or propylene oxides above or from a starter molecule of trimethylol propane, similarly a polyol comprising four polyoxyalkylene chains can by derived from pentaerythritol, and a polyol comprising five polyoxyalkylene chains can be derived from pentanepentols and/or sugar molecules bearing at least five hydroxyl groups.

According to one embodiment the Z group is trivalent, suitably the polyol is glycerol, trimethylpropane (TMP)

or hexanetriol (HT), in particular 1,2,6-hexanetriol.

According to a further embodiment, the Z group is tetravalent, suitably the polyol is pentaerythritol.

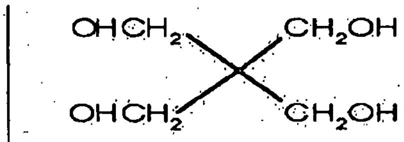

**Pentaerythritol**

According to a further embodiment, when the Z group is pentavalent, suitably the polyol is pentanepentol (in particular 1, 2, 3, 4, 5-Pentanepentol), or is derived from pentanepentol (see formula II below).

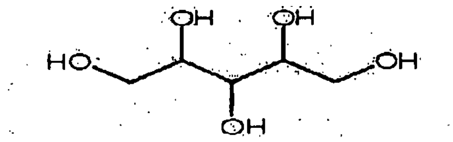

**1,2,3,4,5-Pentanepentol**

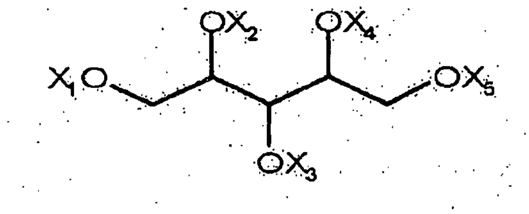

**II**

Where $X_1$, $X_2$, $X_3$, $X_4$ and $X_5$ independently represent H, or an optionally substituted OH terminated polyoxyalkylene chain.

In one preferred embodiment, the polyol is a macropolyol of formula Ia,

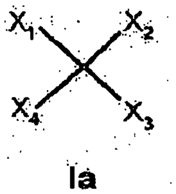

**Ia**

wherein each of $X_1$, $X_2$ and $X_3$ is independently a hydroxyl group or an optionally substituted OH terminated polyoxyalkylene chain;

and $X_4$ is H or as defined for $X_1$, $X_2$ and $X_3$.

In one preferred embodiment, the polyol is of formula Ia, each of $X_1$, $X_2$ and $X_3$ is independently an OH-terminated, unsubstituted polyoxyalkylene chain and $X_4$ is H.

Alternatively the polyol is of formula Ia, each of $X_1$, $X_2$ and $X_3$ is independently an OH-terminated, polyoxyalkylene chain and $X_4$ is H, where the polyoxyalkylene chain does not comprise any tertiary hydrogen atoms.

In another preferred embodiment, the polyol is of formula Ia, each of $X_1$, $X_2$ and $X_3$ and $X_4$ is independently an OH-terminated unsubstituted polyoxyalkylene chain, or alternatively an OH-terminated polyoxyalkylene chain where the polyoxyalkylene chain does not comprise any tertiary hydrogen atoms.

In another preferred embodiment, the macropolyol is of formula Ib,

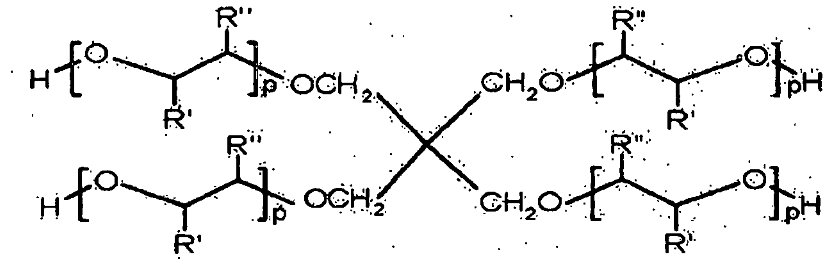

Ib

wherein each p is from about 3 to about 25 and R' and R" represent H. More preferably, p is about 25.

According to one embodiment the polyol is selected from the group consisting of trimethylolpropane (TMP), 1,2,6-hexanetriol (HT) and pentaerythritol (PER).

1,2,6-Hexanetriol (HT) is a clear, colourless viscous liquid at room temperature. HT acts as a 3D crosslinking agent. Increasing the concentration of HT in the reactant mixture, increases the modulus and reduces the water content of the resultant composition. Generally where the polyol is HT, the amount of polyol is 1 wt % or less, typically 0.2 to 0.7 wt%, generally 0.3 to 0.6 wt %.

Pentaerythritol is a white solid at room temperature. PER contains four hydroxyl groups and is used as covalent crosslinker to provide mechanical and thermal stability to the three dimensional polymer matrix of the resultant composition (e.g. a contact lens). Increasing the concentration of PER in the reactant mixture, increases the modulus and reduces the water content of the resultant composition. Generally where the polyol is PER, the amount of polyol is 1 wt % or less, typically 0.05 to 0.2 wt%, generally 0.05 to 0.1 wt %.

Trimethylolpropane (TMP) with its three primary alcohol groups is used as a three dimensional crosslinking agent. It is a white solid at room temperature and easily melts to give a clear liquid at temperatures above its melting range of 58 - 60°C. Increasing the amount of TMP present in the reactant mixture, increases the modulus and reduces the water content of the resultant composition. Generally where the polyol is TMP, the amount of polyol is 5 wt % or less, typically 0.5 to 3 wt%.

Preferably, the polyol or macropolyol is a fluid at ambient temperatures.

According to one embodiment, more than one polyol and/or more than one macropolyol may be used in the reactant mixture.

Additional Compound

The contact lens of the present invention is formed from a polyurethane polymers composition prepared by reacting a mixture comprising one or more hydroxyl groups and one or more primary or secondary amine groups. The additional compound may react with isocyanate groups to form urea, urethane and/or imine groups. The addition of such an additional compound in the reactant mixture provides the resultant contact lens with increased modulus and associated mechanical stability, through the formation of colloidal cross-links to the three dimensional hydrogel matrices. In addition, the use of the additional compound reduces the water content of the resultant composition used to form the contact lens of the present invention and thus provides secondary controls for water content and the physical dimensions of a contact lens of the present invention. The properties of the contact lens of the present invention may be controlled by using the appropriate amount of the additional compound.

Generally, the reactant mixture comprises from about 0.5 wt % or less of the additional compound, typically from about 0.01 to about 0.4 wt %, suitably from about 0.05% to about 0.2 wt %.

The additional compound is generally a difunctional amine, in which the double functionality is provided by the presence of one hydroxyl group and one primary or secondary amine group. According to one embodiment, the additional compound is ethanolamine (EA) (in particular 2-ethanolamine). 2-ethanolamine is a pungent, clear liquid at room temperature.

**Modulus Modifier**

In one preferred embodiment of the invention, the composition used to form the contact lens of the present invention further comprises one or more additional components such as a modulus modifier, plasticizer, humectant, lubricant, process aid, viscosity reducer, compatibility enhancer and/or polymer matrix structure modifier. Preferably, the additional component is present in an amount of 0 to about 20 wt %, more preferably from about 2.5 to about 10 wt %, more preferably still, about 2 to about 5 wt % of the reactants.

Suitable modulus modifiers include components that alter the modulus property of the polyurethane and may also alter the oxygen permeability property, suitably increasing the oxygen permeability of a contact lens formed from the resultant composition. Preferred modulus modifiers include a cycloalkyl modulus modifier (for example, as described in US 4,327,203) or a polycyclic modulus modifier.

The modulus modifier has to be compatible such that it remains evenly distributed (i.e. homogeneous) and does not significantly alter the transmission properties and further, is non-toxic. Moreover, the modulus modifier should not generally react with the reactive components of the composition (i.e. PEG, PPG, di- or poly-isocyanate, polyol and additional compound). If required, the modulus modifier may be extracted from the polymer composition following the polymerization reaction, for instance extracted out during the processing steps of lens manufacture. Suitable modulus modifiers include poly(ethylene glycol) dimethyl ether, PEG DME, PEG diethyl ether, PEG dipropyl ether, PEG dibutyl ether. Advantageously, it can be released slowly over a prolonged period of time to enhance lubricity of the surface in an aqueous environment (e.g. a contact lens on an eye). This in turn would provide significantly enhanced on-eye comfort.

Advantageously, the incorporation of a modulus modifier as an additive in the polymer compositions used to form the lenses of the invention leads to lenses having a reduced modulus. Preferably, the modulus of lenses prepared from the polymer compositions of the invention is from about 0.1 to about 0.8 MPa, more preferably, about 0.3 to about 0.7 MPa, advantageously 0.4 to 0.5 MPa.

The cross-linking in a composition increases the structural integrity, improves the storage stability and also increases the modulus of the material. However, high modulus compositions are not preferred for use in the manufacture of contact lenses. Therefore, a modulus modifier suitably reduces the modulus of the composition. The concentration of the modulus modifier in a given composition can be adjusted to obtain the required modulus of the material, resulting in a contact lens which is compatible for use in or on the body. In particular such a composition would provide a contact lens which is comfortable to wear.

The use of a modulus modifier may reduce the viscosity of the reactant mixture, and may also increase the working time associated with the reaction mixture by the small reduction of the concentration of the reactive groups. This is advantageous as it means that the reaction mixture can be dispensed in moulds more easily than when using high viscosity compositions. The gelation time of the reaction mixture is also extended thereby allowing more time to dispense. The potential water content of resultant polymer compositions is also generally increased through the use of modulus modifiers particularly when a higher molecular weight PEG is used in a given composition.

**Additional Components**

In one preferred embodiment, the mixture used to form the contact lenses of the present invention further comprises one or more antioxidants. Suitable antioxidants include hindered phenols, BHA (butylated hydroxyl anisole), BHT (butylated hydroxytoluene) and ascorbic acid etc. Preferably, the antioxidant is BHA.

Preferably, the antioxidant is used in an amount of about 0.01 to about 3.0 wt % of the reactants, more preferably from about 0.02 to about 2.0 wt %, even more preferably from about 0.05 to about 1.0 wt %.

In one preferred embodiment, the composition used to form the contact lenses of the invention further comprises one or more tinting agents. By way of example, suitable tinting agents commonly used in the contact lens industry include the following: benzene sulfonic acid, 4-(4,5-dihydro-4((2-methoxy-5-methyl-4-((2-(sulfooxy)ethyl)sulfonyl)phenyl)azo-3-methyl-5-oxo-1Hpyrazol-1-yl); [2-naphthalene-sulfonic acid, 7-(acetylamino)-4-hydroxyl-3-((4-((sulfooxyethyl)sulfonyl)phenyl)azo)-]; [5-((4,6-dichloro-1,3,5-triazin-2-yl)amino-4-hydroxy-3((1-sulfo-2-naphthalenyl)azo-2,7-naphthalene-disulfonic acid, trisodium salt]; [copper, 29H, 31H-phthalocyaninato(2-)-$N_{29}$,$N_{30}$,$N_{31}$,$N_{32}$)-,sulfo((4((2-sulfooxy)ethyl)sulfonyl)phenyl)amino) sulfonyl derivative]; and [2,7-naphthalenesulfonic acid, 4-amino-5hydroxy-3,6-bis((4-((2-(sulfooxy)ethyl)sulfonyl) phenyl)azo)-tetrasodium salt].

Particularly preferred tinting agents for use in the present invention are phthalocyanine pigments such as phthalocyanine blue and phthalocyanine green, chromic-aluminacobaltous oxide, chromium oxides, and various iron oxides for red, yellow, brown and black colours,as well as others commonly used in the art. The use of organic pigments, particularly phthalocyanine pigments, more particularly copper phthalocyanine pigments, and even more particularly copper phthalocyanine blue pigment (e.g., Colour Index Pigment Blue 15, Constitution No. 74160) is preferred. Opaquing agents such as titanium dioxide may also be incorporated. For certain applications, a mixture of colours may be employed for better simulation of natural iris appearance.

In one preferred embodiment, the tinting agent is a handling tint such as Reactive Blue 4.

Preferably, the weight percentage of the tinting agent is from about 0.0001 wt % to about 0.08 wt % of the reactant mixture, more preferably, 0.0001 wt % to about 0.05 wt %. In one preferred embodiment, the tinting agent is present in an amount of from about 0.005 to 0.08 wt %. In one preferred embodiment, the weight percentage of the tint is from about 0.0001 % to about 0.04 %, more preferably, from about 0.0001 % to about 0.03 wt % of the reactants. Optionally the tinting agent can be incorporated during the hydration stage.

In one preferred embodiment, the composition used to form the contact lenses of the invention further comprises

one or more UV blockers or UV absorbers. A UV absorber may be, for example, a strong UV absorber that exhibits relatively high absorption values in the UV-A range of about 320-380 nanometers, but is relatively transparent above about 380 nm. Preferably, the UV Blocker is a commercially available UV Blocker such as AEHB (acryloxyethoxy hydroxybenzophenone; $C_{18}H_{16}O_S$).

Generally speaking, a UV absorber, if present, is provided in an amount from about 0.5 wt % to about 1.5 wt % of the reactants. Particularly preferred are compositions which include from about 0.6 wt % to about 1.0 wt % UV absorber, more preferably, about 1.0 wt % of the reactants. Optionally the UV blocker may be incorporated during the hydration stage.

In one preferred embodiment, a catalyst is added to the mixture formed in step (i). In one preferred embodiment, the PEG, PPG, polyol, di- or poly-isocyanate and the additional cross-linking compound are reacted in the presence of a catalyst. Preferably, the catalyst is a transition metal compound typically used for speeding up the reaction of isocyanates with hydroxyl-containing compounds and used in the manufacture of polyurethanes. Examples include, but are not limited to, transition metal catalysts such as tin, zinc, bismuth and zirconium catalysts. The catalyst may also be a tertiary amine or polyamine. Particularly preferred catalysts include dibutyl tin dilaurate (DBTDL), $FeCl_3$, stannous octoate, tertiary amines such as triethylamine, and the like. In one highly preferred embodiment, the catalyst is anhydrous Ferric chloride. Optionally mixed catalysts may be used.

Preferably, the catalyst is used in an amount of from about 0.02 wt % to about 1.0 wt % of the reactants, more preferably, from about 0.05 wt % to about 0.5 wt %, even more preferably, from about 0.05 wt % to about 0.2 wt %, of the reactants.

**Process for Preparing a Contact Lens**

A further aspect of the present invention relates to a process for preparing a contact lens comprising the steps of:

i) preparing a mixture of:

a. 30 to 70 wt% of at least one poly(ethylene glycol) having a number average molecular weight of 2000 to 12000.
b. 10 to 70 wt% of at least one polyoxyalkylene diol (typically selected from the group consisting of PPG or and a copolymer of ethylene oxide and propylene oxide),
c. at least one di- or poly-isocyanate, and
d. at least one polvol or macropolyol, said macropolyol having a functionality greater than 2, or a mixture of such polyols or macropolyols having a functionality of greater than 2 and,
e. an additional compound comprising at least one hydroxyl group and at least one primary or secondary amine group;

j) dispensing the reaction mixture formed in step i) into a contact lens mould;
k) allowing the reaction mixture to react and cure (generally with the assistance with energy, in particular thermal energy, or other means of radiation);
l) removing the contact lens from the mould; and
m) hydrating the contact lens, optionally in the presence of a surface active agent, such as a polysorbate compound or poloxamer or mixture thereof.

Preferably, the process of the present invention involves curing the reactant mixture of step i. directly to form a polyurethane xerogel without the need for the addition of water as a reactant. This is in contrast to the prior art process described in US 6,930,196.

According to one embodiment, the reactant mixture is substantially anhydrous, i.e. without the addition of water as a reactant. The incorporation of urea groups (formed from the presence of water in the reactant mixture) increases the modulus value of the resultant polyurethane composition, which is undesirable in materials for use in the contact lens industry. Advantageously, the present invention substantially excludes water from the reactant mixture (as far as practically attainable), thereby minimising the formation of urea groups in the polymer backbone and giving rise to materials were contribution towards raising the modulus by urea groups is substantially minimized.

In order to minimise the formation of urea groups, where the additional component is or comprises an ethanolamine (EA), the amount of additional component is generally limited to no more than 0.1 wt %. Typically the amount of EA present is 0.01 to 0.05 wt %.

Suitable reactants for use in the process of the present invention are those described above.

In one preferred embodiment, a catalyst is added to the mixture formed in step (i). Suitable catalysts (together with guidance as to the appropriate amount) are as described above. In one highly preferred embodiment, the catalyst is ferric chloride ($FeCl_3$). Optionally mixed catalysts may be used.

Additional components, such as modulus modifiers, plasticizers, humectants, lubricants, antioxidants, process aids, viscosity reducers, tinting agents, compatibility enhancers and/or polymer matrix structure modifiers as described above, may also be present in the reaction mixture.

In one preferred embodiment of the invention the reactants in step (i) are mixed and dehydrated under vacuum. Preferably, the reactants are dehydrated under vacuum at a temperature of about 95°C for at least 90 minutes. Generally, the reactants are dehydrated (typically under vacuum) until the moisture content of the mixture is reduced to a level below 0.05 wt%.

In one preferred embodiment, the di-or poly-isocyanate is added to a mixture of the PEG, the PPG and the polyol.

Preferably, the reactants in step (i) are degassed under vacuum using a rotary evaporator.

The contact lens may be hydrated using an aqueous medium with or without a surfactant.

Generally the reaction mixture must be dispensed in molten form at temperatures of from 50 to 70 °C as the reaction mixture is generally not liquid at ambient temperature.

In one preferred embodiment, the reactants in step (i) are dispensed into a female lens mold and the male part of the lens mold is then placed over the liquid contained in the female part and subsequently closed, typically by a machine or other means.

In one preferred embodiment, the molds are placed in an oven and allowed to cure to complete the reaction. Preferably, the molds are allowed to cure at a temperature of from about 70°C to about 100°C, more preferably, from about 85°C to about 95°C. In one highly preferred embodiment, the molds are allowed to cure at a temperature of least 95°C.

Preferably, the molds are allowed to cure for about 0.5 to about 24 hours, more preferably for about 15 to 22 hours. Alternatively, the molds may be allowed to cure for about 3 to about 8 hours, typically for at least about 5 hours. Optionally the curing can also be done in the oven under a dry nitrogen flow.

Preferably, the molds are removed from the oven and allowed to cool to around ambient temperature, and then may be demolded.

Optionally, after step (iii) the mold may be cooled to a temperature of from about -30°C to about-120°C prior to removing the contact lens from the mold.

Suitably, the molds are chilled in a freezer. More preferably, still, the molds are chilled to a temperature of from about -50 °C to about -90°C, even more preferably from about -60°C to about -90°C. More preferably still, the molds are chilled to a temperature of about -80°C. Preferably, the molds are chilled for about 30 minutes, more preferably, at about 60 minutes. In one especially preferred embodiment, the lenses are chilled for at least 20 minutes.

Advantageously, the cooling process allows the polymer chains to attain a temperature below the glass transition temperature that shrinks the polymer matrix and reduces the interaction at the interface which enhances the demolding of the lens product.

The lenses are then preferably demolded from the molds by separating the male and female parts. Preferably, the lenses are hydrated by immersion in a hydration solution. Typically the hydration solution comprises saline solution which may optionally comprise surfactant. According to one embodiment the hydration solution comprises a non-ionic surface active agent, such as a polysorbate or poloxamer compound. In particular, the hydration solution comprises polysorbate 20.

Alternatively, in another preferred embodiment where a modulus modifier has been used in the formulation, the lens molds are physically separated (at ambient temperature) and the part containing the lense immersed in excess of saline solution (optionally comprising surfactant) for 5-150 minutes, more preferably for 60-90 minutes, more preferably still for 30-60 minutes, to demold the lens.

Generally, processing step (ii) involves reaction cast molding where the material is molded into the shape of a lens. This process is generally referred to as reaction cast moulding (RCM), and the lens produced by this method is termed here as an RCM lens.

The polymeric composition used to form the contact lens of the present invention is covalently cross-linked and, once polymerised, will not melt or flow without chemical decomposition.

Advantageously, the contact lens of the present invention, is able to withstand autoclave steam sterilisation without significant permanent distortion of its dimensions when returned to ambient temperature.

Steam sterilisation generally takes place under increased temperature and pressure. Typically temperatures of 100 to 150 °C are used. Pressures of 160 to 165 kPa are commonly used.

A contact lens must be permeable to oxygen in order for the lens to facilitate normal corneal metabolism. Preferably, contact lenses of the invention exhibit a DK value of a least 10 Barrer, preferably, at least 20, more preferably, about 30 Barrer, even more preferably about 40 Barrer.

In one preferred embodiment, the lenses have a DK of about 15 to about 45 Barrer more preferably, from about 25 to about 40 or more Barrer.

A contact lens must be able to transmit light in the visible region in order to function effectively in correcting visual defects. Preferably, contact lenses of the invention exhibit a light transmissibility of at least 80 %, more preferably

at least 90 %, even more preferably, at least 95 % or 97 %. Preferably, the light transmissibility is from about 90 to about 100 %, more preferably from about 95 to about 100 %, more preferably still, 100%.

Preferably, contact lenses of the invention exhibit a modulus of from about 0.1 to about 1.25 MPa, typically from about 0.25 to about 0.75 MPa, generally from about 0.30 to about 0.5 MPa.

The modulus of a contact lens plays a key role in controlling the mechanical properties of a soft contact lens. In addition, the on-eye performance is directly affected by the modulus. A value of greater than 1.25 MPa is likely to cause corneal staining whilst a modulus below 0.1 MPa is likely to lead to a lens with poor handling properties.

Preferably, contact lenses of the invention have a water content of 10 to about 90 weight %, more preferably, from about 20 to about 80 weight %, more preferably, from about 25 to about 75 weight %, even more preferably, from about 30 to about 70 weight %, more preferably still, from about 40 to about 70 weight %.

The equilibrium water content of the lens is an important material attribute and plays a key role in determining the bulk, mechanical and physical properties of the lens. Water and the polyoxyethylene chains provide the medium to transmit oxygen and with the modulus governs the on-eye properties of the lens.

Generally the polyurethane composition used to form the contact lenses of the present invention has a very high visual clarity, with little or no associated light scattering. Lenses of the present invention do not generally exhibit any Tyndall effect.

The present invention will now be described by way of non-limiting example only with reference to accompanying tables 1, 2 and 3 illustrating embodiments of the present invention.

## Examples

### Materials & Treatment

Poly(ethylene glycol) 6000 (two different batches), 3500 and 8000 (ex Clariant) were separately dehydrated under vacuum. The duration and conditions of dehydration depends upon the sample weight and is adjusted such that the residual moisture content falls below 0.05 wt%. For the articles formed according to the Examples, the materials were generally dehydrated at 95°C for 4 hours. The number average molecular weights (Mn) of the materials were determined by the end group analysis. These analyses respectively afforded Mn = 5527 & 5931 (of a different batch of PEG 6000), 3880 and 8095. These values were used in calculating the stoichiometry and the material so formed is referred in the tables of the examples as PEG 5527, PEG 5931. PEG 3880, PEG 8095. Subsequently the dehydrated materials were used in the manufacture of polymer/lenses.

Poly(propylene glycol) of molecular weight 430 (ex Atlas polymers), referred herein after as PPG 430, was also dehydrated under vacuum at 95°C using a rotary evaporator to reduce the moisture content to <0.030% before use. Dicyclohexylmethane-4,4'-diisocyanate, Desmodur W, was also sourced from Atlas Polymers UK and used without further purification. Ethanol amine (EA), Ferric chloride (anhydrous), hexane triol (HT), trimethylol propane (TMP), and butylated hydroxyanisole (BHA), were sourced from Sigma Aldrich and used as supplied.

### Method of Manufacture

**The compositions detailed in Tables 1,2 were manufactured by a common method described below for composition 1 listed in the Table 1.**

Using an analytical balance accurately weigh, into a 100 ml round bottom quickfit flask, the appropriate quantities of dehydrated PPG 430 (7.3398g), HT(0.9136g), Ferric chloride (0.0167g) ,BHA (0.0182g) the flask is stoppered and placed in a microwave for few seconds to dissolve the contents. EA(0.0204g) and the dehydrated PEG 5527(20.021g) were then added to the flask. (Optionally the above components can be mixed to gether and then subjected to the necessary dehydration.) The contents were mixed using a magnetic stirring rod and DesmodurW (8.3500g) was added to the flask through a syringe. The stirring was continued for one more minute and the flask was attached to a rotary evaporator to degas. This material was then dispensed into the female part of the preheated polypropylene lens moulds, the male part of the moulds were carefully touch dropped and subsequently closed by using a machine or other method. These moulds were then cured for 22 hours in an oven at 95°C to complete the reaction. The lens moulds containing the product were allowed to cool to ambient temperature, chilled in a freezer, separated, the products (contact lenses) were demolded. These lenses were subsequently immersed individually into saline contained in glass vials. After ~2 hours of hydration these were steam sterilised (122 °C for 20 minutes) using a standard autoclave and method.

Optionally the saline may contain tinting agent such as Reactive Blue 4.

### Water content

Water content is calculated by determining dry weight and hydrated weight of a lens according to the following

equation:

$$Water\ Content\ (\%) = (W_{hydrated\ lens} - W_{dry\ lens}) / W_{hydrated\ lens}\ [x\ 100]$$

Five hydrated lenses, with excess surface water removed, are separately weighed on an analytical balance. The lenses are then dried in an oven at 75°C for 2 hours and weighed again separately. The water content of each lens was determined separately using the above equation. Finally an average value for the water content of the lenses was determined, and the average value represents the water content of that lens composition.

% **Transmittance**

% Transmittance was determined under the guidance of ISO 8599 by using a double beam UV spectrophotometer (Jasco V530). A lens is placed into a cuvette containing standard saline solution. The cuvette is placed in the sample compartment. A matching cuvette containing saline is placed in the reference compartment of the UV spectrophotometer and a spectrum as percent transmittance was recorded between 200-780nm. The test was repeated a further four times and the mean value (% transmittance) at 550nm was recorded. The lenses of the present invention afforded light transmission in excess of 80% at 550nm.

**DK Measurement**

DK Measurement (i.e., oxygen permeability) was carried out by the polarographic technique as briefly described below:

Ten lenses were placed into the Gallenkamp incubator set at 35 +/-0.5 ° C for 24 hours. The centre thickness (CT) of each of the ten lenses were measured by Rehder ET-3 Electronic Thickness Gauge and these lenses were stacked as follows: A single lens stack, two lens stack, three lens stack, and four lens stack. The CT of each stack was measured three times and a mean value for each was calculated and fed into a spread sheet specifically developed for the method. Also recorded was the atmospheric pressure. The stack of lenses were replaced into the incubator set at 35 +/-0.5 ° C and humidity > 98%.

Each stack was separately placed on to the electrode (Rehder Permeometer with 8.7 mm electrode) ensuring that there are no bubbles entrapped between the lenses and the electrode. When the current reached its lowest point the reading was recorded in the relevant section of the spread sheet. This test was repeated for all the stacks.

The dark current reading (background) of the measurement system, when no oxygen is able to pass through to the electrode, was recorded and subtracted from all test material current values. Data was analysed taking into consideration the partial pressure of oxygen and the surface area of the polarographic sensor used and finally corrected for the edge effect. A graph of DK/t corr versus thickness (cm) was then plotted and the inverse of the gradient of the best fit taken to represent the oxygen permeability (DK) of the lens material.

**Modulus Data**

Modulus data was measured for contact lenses prepared in accordance with the invention by tensile testing using the Instron 5842 Tensile testing system with Merlin Software.

Correlation to Standards/Regulation: ISO 9001:2008 (Quality Standards: Par 7.6; ISO 13485:2003 Medical Device Directive: Par 7.6; FDA Part 820 QS Regulation Subpart G: Control of inspection, monitoring and test equipment 820.72.

**Process (Material Preparation)**

Thickness readings for each lens were obtained using the ET-3 Thickness gauge. The lenses were placed flat on the cutting mat and two long pieces were cut from around the centre of the flat lens using a razor blade. These cut pieces were put into saline solution in a sample dish. The sample was loaded on to clamps using tweezers carefully going for the top clamp first and then the bottom. The gap in between the clamps was set at 10 mm using a calibrated vernier caliper. Once set, the "Reset GL" button was pressed to set the Gauge Length". Once the sample was loaded, the balance load was set to 0.000N and the test was started using the console controls.

## Contact Angle

The contact lenses to be tested were prepared by removing them from the surfactant solution in which they are generally stored, and washing them with water. Each lens was removed from packaging and dried using tissue. Six lenses of each lens type were placed into a jar containing at least 500mls of deionised water (DI water). Each jar was then stored at 25 °C for 16 hours or more. The DI water was then replaced and each jar was placed onto a roller unit for 2 hours. The lenses were then taken out of the jars and placed separately into labelled vials containing fresh DI water.
The wet lenses were removed from the jar using silicone tipped tweezers. Excess saline was removed by placing the lens front surface down onto a lint free tissue. The lens was then placed so that the convex surface was facing upwards, and a test sample was cut using the 4mm cutter. The cut lens section was then placed face down on the lens wipe and the surface liquid was allowed to blot. The section was placed onto a microscope slide with front of the lens facing upwards and the section lying flat. The microscope slide was then placed underneath the PGX within the camera zone. "Pump" was pressed on the PGX, until a droplet emerges, this droplet then falls onto the section surface of the cut lens strip. The software measures the contact angle as soon as the drop touches the surface.
Table 1 shows some examples of the compositions of the present invention. The molecular weight of the PEG used in the compositions was varied. Compositions containing the polyol HT, and compositions containing the polyol TMP are exemplified in Table 1.
Table 2 shows some examples of the compositions of the present invention. The compositions of Table 2 contained PEG having a molecular weight of around 6000. The compositions exemplified in Table 2 contain the polyol TMP.
The symbols V1, V2, V3 and V5D indicated in the Table headings are internal references used by the applicant, and are used for the convenience of the inventors.
Various modifications and variations of the described aspects of the invention will be apparent to those skilled in the art. Although the invention has been described in connection with specific preferred embodiments, it should be understood that the invention as claimed should not be unduly limited to such specific embodiments. Where provided, numerical values are intended to include a range of 10% either side of the value given.

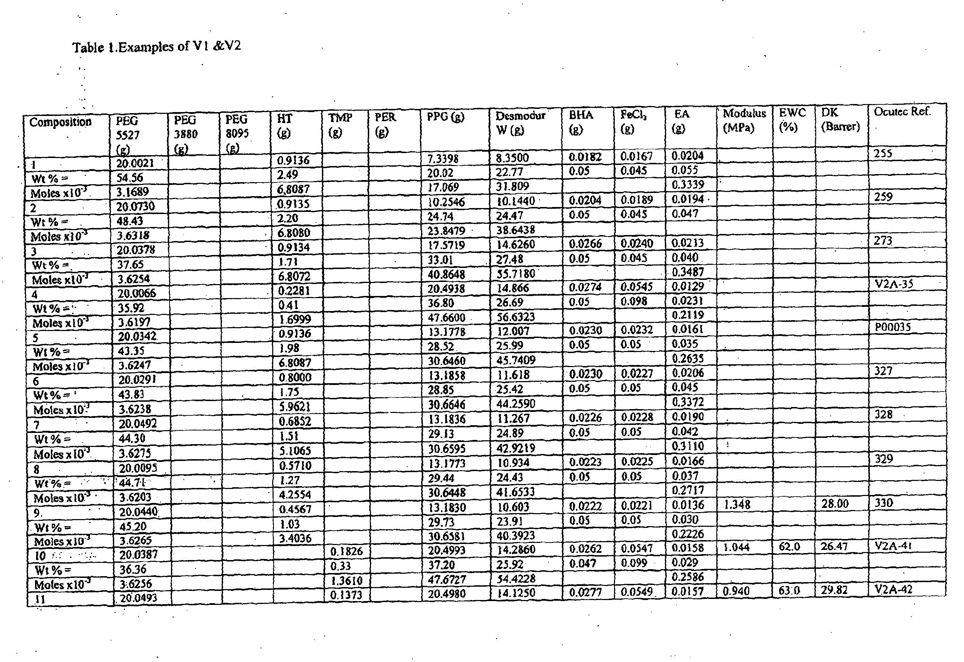

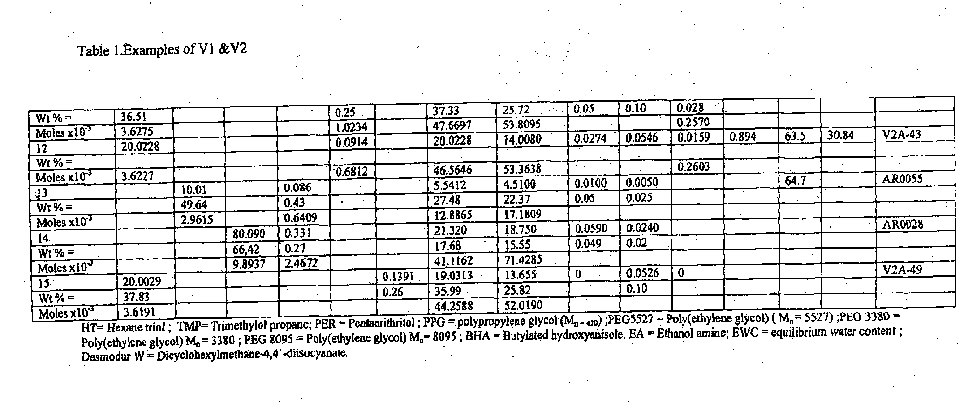

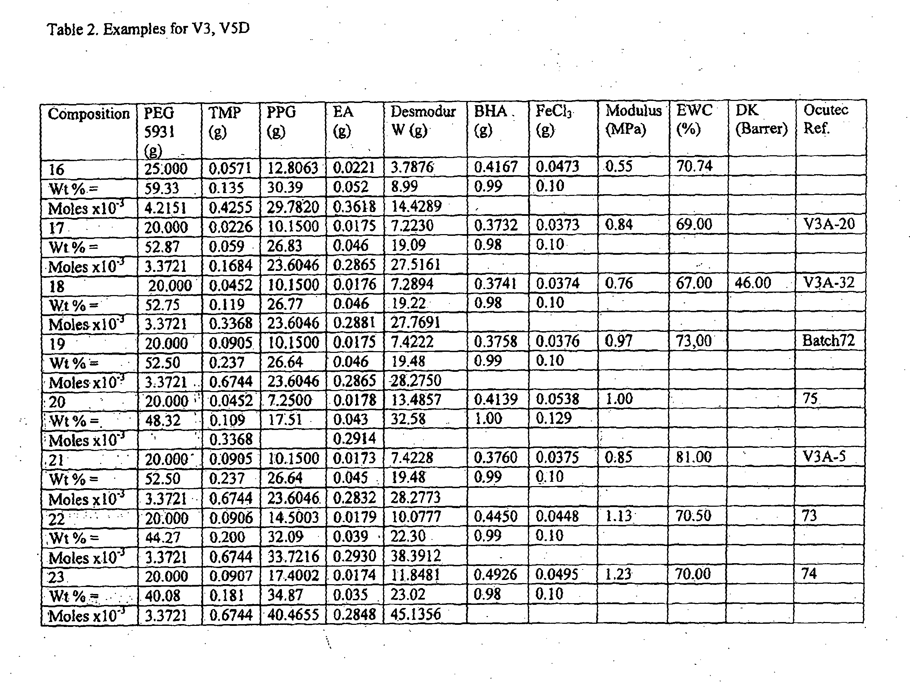

## Claims

**1.** A contact lens formed from a polyurethane polymer composition prepared by reacting a mixture comprising:

a) 30 to 70 wt% of at least one poly(ethylene glycol) having a number average molecular weight of 2000 to 12000,
b) 10 to 70 wt% of at least one polyoxyalkylene diol selected from the group consisting of PPG and a copolymer of ethylene oxide and propylene oxide,
c) at least one di- or poly-isocyanate,
d) at least one polyol or macropolyol having a functionality greater than 2, or a mixture of such polyols or macropolyols having a functionality greater than 2,
e) an additional compound comprising at least one hydroxyl group and at least one primary or secondary amine group.

**2.** The contact lens as claimed in claim 1 wherein the poly(ethylene glycol) has a number average molecular weight of 3000 to 9000.

**3.** The contact lens as claimed in either one of claims 1 and 2 wherein the polyol or macropolyol has the structure of formula:

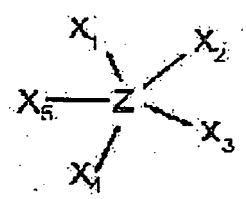

I

wherein at least three of $X_1$, $X_2$, $X_3$, $X_4$ and $X^5$ are each independently a hydroxyl terminated polyoxyalkylene chain, the remainder of $X_1$, $X_2$, $X_3$, $X_4$ and $X_5$ are each independently H or absent, and Z is a central linking unit.

**4.** The contact lens as claimed in any preceding claim wherein the polyol is glycerol, trimethylolpropane (TMP) or hexanetriol (HT).

**5.** The contact lens as claimed in any one of claims 1 to 3 wherein the macropolyol has the structure of formula 1a or 1b:

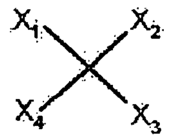

**Ia**

wherein each of $X_1$, $X_2$ and $X_3$ is independently an optionally substituted OH terminated polyoxyalkylene chain; and $X_4$ is H or as defined for $X_1$, $X_2$ and $X_3$

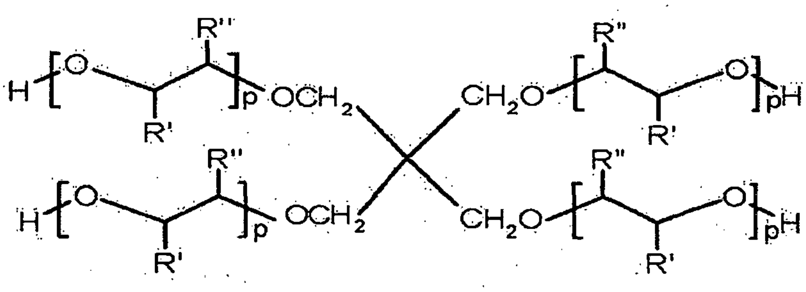

**Ib**

wherein each p is from about 3 to about 25 and R' and R" represent H.

**6.** The contact lens as claimed in any preceding claim wherein the mixture is essentially anhydrous.

**7.** The contact lens as claimed in any preceding claim, wherein said additional compound is a difunctional amine comprising one hydroxyl group and one primary or secondary amine group.

**8.** A process for preparing a contact lens comprising the steps of:

i) preparing a mixture of:

a) 30 to 70 wt% of at least one poly(ethylene glycol) having a number average molecular weight of 2000 to 12000,
b) at least 10 wt% to 70 wt% of at least one polyoxyalkylene diol selected from the group consisting of PPG and a copolymer of ethylene oxide and propylene oxide,
c) at least one di- or poly-isocyanate,
d) at least one polyol or macropolyol having a functionality greater than 2, or a mixture of such polyols or macropolyols having a functionality greater than 2,
e) an additional compound comprising at least one hydroxyl group and at least one primary or secondary amine group;

ii) dispensing the reaction mixture formed in step i) into a contact lens mold;
iii) allowing the reaction mixture to react and cure (generally with the assistance with energy, in particular thermal energy or radiation);
iv) removing the contact lens from the mold; and

v) hydrating the contact lens, optionally in an aqueous fluid comprising a non-ionic surface active agent, preferably a poloxamer or a polysorbate compound or mixture thereof.

**9.** A contact lens comprising a polymer as claimed in any one of claims 1 to 7.

**10.** A contact lens as claimed in claim 9, wherein said contact lens does not undergo permanent distortion of its dimensions after being subjected to autoclave steam sterilisation.

## Patentansprüche

**1.** Eine Kontaktlinse, die aus einer Polyurethanpolymerzusammensetzung gebildet ist, die durch das Zur-Reaktion-Bringen einer Mischung hergestellt wird, die Folgendes umfasst:

a) zu 30 bis 70 Gew.-% mindestens ein Poly(ethylenglykol) mit einem Zahlenmittel der Molmasse von 2000 bis 12 000,
b) zu 10 bis 70 Gew.-% mindestens ein Polyoxyalkylen-Diol, ausgewählt aus der Gruppe, bestehend aus PPG und einem Copolymer von Ethylenoxid und Propylenoxid,
c) mindestens ein Di- oder Polyisocyanat,
d) mindestens ein Polyol oder Makropolyol mit einer Funktionalität von mehr als 2 oder eine Mischung aus solchen Polyolen oder Makropolyolen mit einer Funktionalität von mehr als 2,
e) eine zusätzliche Verbindung, die mindestens eine Hydroxylgruppe und mindestens eine primäre oder sekundäre Amingruppe umfasst.

**2.** Kontaktlinse nach Anspruch 1, wobei das Poly(ethylenglykol) ein Zahlenmittel der Molmasse von 3000 bis 9000 aufweist.

**3.** Kontaktlinse nach einem vorhergehenden Anspruch, wobei das Polyol oder Makropolyol die Struktur der folgenden Formel aufweist:

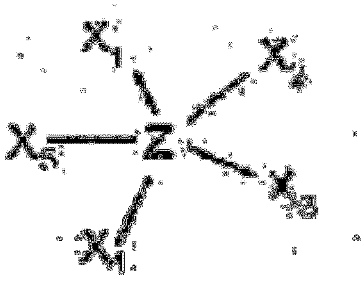

I.

wobei mindestens drei von $X_1$, $X_2$, $X_3$, $X_4$ und $X^5$ jeweils unabhängig eine hydroxylterminierte Polyoxyalkylenkette sind, der Rest von $X_1$, $X_2$, $X_3$, $X_4$ und $X_5$ jeweils unabhängig H oder abwesend ist und Z eine zentrale Verknüpfungseinheit ist.

**4.** Kontaktlinse nach einem vorhergehenden Anspruch, wobei das Polyol Glycerin, Trimethylpropan (TMP) oder Hexantriol (HT) ist.

**5.** Kontaktlinse nach einem der Ansprüche 1 bis 4, wobei das Makropolyol die Struktur der Formel la oder Ib aufweist:

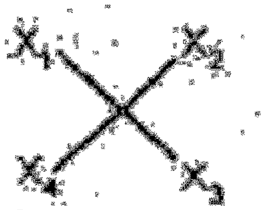

Ia

wobei jedes von $X_1$, $X_2$ und $X_3$ jeweils unabhängig eine optional substituierte OHterminierte Polyoxyalkylenkette ist; und $X_4$ H ist oder wie für $X_1$, $X_2$ und $X_3$ definiert ist,

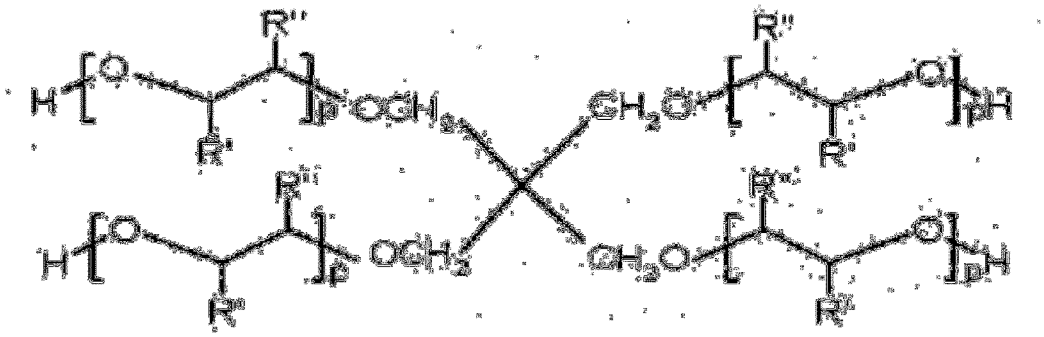

Ib

wobei jedes p von etwa 3 bis etwa 25 ist und R' und R" H darstellen.

**6.** Kontaktlinse nach einem vorhergehenden Anspruch, wobei die Mischung im Wesentlichen wasserfrei ist.

**7.** Kontaktlinse nach einem vorhergehenden Anspruch, wobei die zusätzliche Verbindung ein difunktionelles Amin ist, das eine Hydroxylgruppe und eine primäre oder sekundäre Amingruppe umfasst.

**8.** Ein Verfahren zum Herstellen einer Kontaktlinse, das die folgenden Schritte umfasst:

i) Herstellen einer Mischung aus Folgendem:

a) zu 30 bis 70 Gew.-% mindestens ein Poly(ethylenglykol) mit einem Zahlenmittel der Molmasse von 2000 bis 12 000,
b) zu mindestens 10 Gew.-% bis 70 Gew.-% mindestens ein Polyoxyalkylen-Diol, ausgewählt aus der Gruppe, bestehend aus PPG und einem Copolymer von Ethylenoxid und Propylenoxid,
c) mindestens ein Di- oder Polyisocyanat,
d) mindestens ein Polyol oder Makropolyol mit einer Funktionalität von mehr als 2 oder eine Mischung aus solchen Polyolen oder Makropolyolen mit einer Funktionalität von mehr als 2,
e) eine zusätzliche Verbindung, umfassend mindestens eine Hydroxylgruppe und mindestens eine primäre oder sekundäre Amingruppe;

ii) Abgeben der in Schritt i) gebildeten Reaktionsmischung in eine Kontaktlinsenform;
iii) Ermöglichen, dass die Reaktionsmischung eine Reaktion eingeht und aushärtet (im Allgemeinen mit Hilfe von Energie, insbesondere Wärmeenergie oder Strahlung);
iv) Entfernen der Kontaktlinse aus der Form; und
v) Hydratisieren der Kontaktlinse, optional in einem wässrigen Fluid, umfassend ein nichtionisches oberflächenaktives Mittel, vorzugsweise ein Polyoxamer oder eine Polysorbatverbindung oder eine Mischung davon.

**9.** Kontaktlinse, umfassend ein Polymer nach einem der Ansprüche 1 bis 7.

**10.** Kontaktlinse nach Anspruch 9, wobei die Kontaktlinse keine dauerhafte Verformung ihrer Dimensionen erlebt, nachdem sie einer Dampfsterilisation im Autoklaven ausgesetzt wurde.

## Revendications

**1.** Une lentille de contact formée à partir d'une composition de polymère de polyuréthane préparée en faisant réagir un mélange comprenant :

a) 30 à 70 % en poids d'au moins un poly(éthylène glycol) ayant un poids moléculaire moyen en nombre de 2 000 à 12 000,
b) 10 à 70 % en poids d'au moins un diol de polyoxyalkylène sélectionné dans le groupe composé de PPG et d'un copolymère d'oxyde d'éthylène et d'oxyde de propylène,
c) au moins un diisocyanate ou polyisocyanate,
d) au moins un polyol ou macropolyol ayant une fonctionnalité supérieure à 2, ou un mélange de polyols ou macropolyols de la sorte ayant une fonctionnalité supérieure à 2,
e) un composé supplémentaire comprenant au moins un groupe hydroxyle et au moins un groupe amine primaire ou secondaire.

**2.** La lentille de contact telle que revendiquée dans la revendication 1 dans laquelle le poly(éthylène glycol) a un poids moléculaire moyen en nombre de 3 000 à 9 000.

**3.** La lentille de contact telle que revendiquée dans n'importe quelle revendication précédente dans laquelle le polyol or macropolyol a la structure de formule :

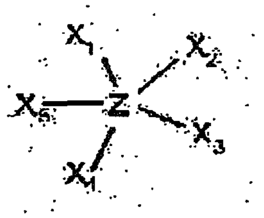

I

dans laquelle au moins trois éléments parmi $X_1$, $X_2$, $X_3$, $X_4$ et $X^5$ sont chacun indépendamment une chaîne polyoxyalkylène à terminaison hydroxyle, et les éléments restants de $X_1$, $X_2$, $X_3$, $X_4$ et $X_5$ sont chacun indépendamment H ou absents, et Z est une unité de liaison centrale.

**4.** La lentille de contact telle que revendiquée dans n'importe quelle revendication précédente dans laquelle le polyol est du glycérol, du triméthylolpropane (TMP) ou de l'hexanetriol (HT).

**5.** La lentille de contact telle que revendiquée dans l'une quelconque des revendications 1 à 4 dans laquelle le macropolyol a la structure de formule la ou 1b :

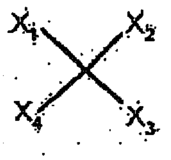

Ia

dans laquelle chaque élément parmi $X_1$, $X_2$ et $X_3$ est indépendamment une chaîne polyoxyalkylène à terminaison OH facultativement substituée ; et $X_4$ est H ou bien tel que défini pour $X_1$, $X_2$ et $X_3$

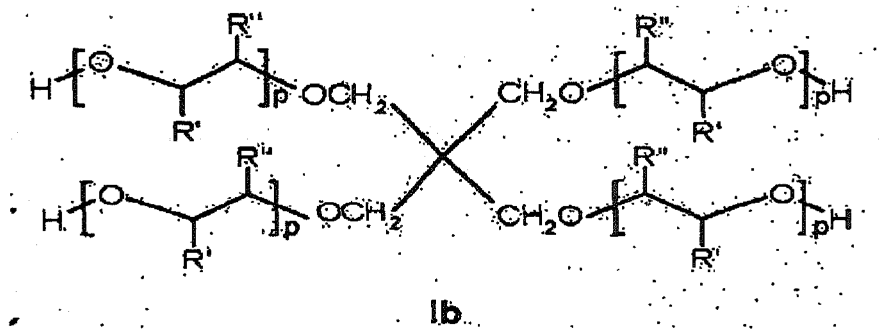

Ib

dans laquelle chaque p est d'environ 3 à environ 25 et R' et R" représentent H.

6. La lentille de contact telle que revendiquée dans n'importe quelle revendication précédente dans laquelle le mélange est essentiellement anhydre.

7. La lentille de contact telle que revendiquée dans n'importe quelle revendication précédente, dans laquelle ledit composé supplémentaire est une amine dysfonctionnelle comprenant un groupe hydroxyle et un groupe amine primaire ou secondaire.

8. Un procédé pour préparer une lentille de contact comprenant les étapes de :

i) préparer un mélange de :

a) 30 à 70 % en poids d'au moins un poly(éthylène glycol) ayant un poids moléculaire moyen en nombre de 2 000 à 12 000,
b) au moins 10 à 70 % en poids d'au moins un diol de polyoxyalkylène sélectionné dans le groupe composé de PPG et d'un copolymère d'oxyde d'éthylène et d'oxyde de propylène,
c) au moins un diisocyanate ou polyisocyanate,
d) au moins un polyol ou macropolyol ayant une fonctionnalité supérieure à 2, ou un mélange de polyols ou macropolyols de la sorte ayant une fonctionnalité supérieure à 2,
e) un composé supplémentaire comprenant au moins un groupe hydroxyle et au moins un groupe amine primaire ou secondaire ;

ii) distribuer le mélange de réaction formé à l'étape i) dans un moule de lentille de contact ;
iii) laisser le mélange de réaction réagir et durcir (généralement à l'aide d'énergie, en particulier un rayonnement ou une énergie thermique) ;
iv) retirer la lentille de contact du moule ; et
v) hydrater la lentille de contact, facultativement dans un fluide aqueux comprenant un agent tensioactif non ionique, de préférence un poloxamère ou un composé de polysorbate ou un mélange de ceux-ci.

9. Une lentille de contact comprenant un polymère telle que revendiquée dans l'une quelconque des revendications 1 à 7.

10. Une lentille de contact telle que revendiquée dans la revendication 9, dans laquelle ladite lentille de contact ne subit pas de distorsion permanente de ses dimensions après avoir été soumise à une stérilisation en autoclave à la vapeur.

Table 1. Examples of V1 &V2

| Composition | PEG 5527 (g) | PEG 3880 (g) | PEG 8095 (g) | HT (g) | TMP (g) | PER (g) | PPG (g) | Desmodur W (g) | BHA (g) | $FeCl_3$ (g) | EA (g) | Modulus (MPa) | EWC (%) | DK (Barrer) | Ocutec Ref. |
|---|---|---|---|---|---|---|---|---|---|---|---|---|---|---|---|
| 1 | 20.0021 | | | 0.9136 | | | 7.3398 | 8.3500 | 0.0182 | 0.0167 | 0.0204 | | | | 255 |
| Wt % = | 54.56 | | | 2.49 | | | 20.02 | 22.77 | 0.05 | 0.045 | 0.055 | | | | |
| Moles x$10^{-3}$ | 3.1689 | | | 6.8087 | | | 17.069 | 31.809 | | | 0.3339 | | | | |
| 2 | 20.0730 | | | 0.9135 | | | 10.2546 | 10.1440 | 0.0204 | 0.0189 | 0.0194 | | | | 259 |
| Wt % = | 48.43 | | | 2.20 | | | 24.74 | 24.47 | 0.05 | 0.045 | 0.047 | | | | |
| Moles x$10^{-3}$ | 3.6318 | | | 6.8080 | | | 23.8479 | 38.6438 | | | | | | | |
| 3 | 20.0378 | | | 0.9134 | | | 17.5719 | 14.6260 | 0.0266 | 0.0240 | 0.0213 | | | | 273 |
| Wt % = | 37.65 | | | 1.71 | | | 33.01 | 27.48 | 0.05 | 0.045 | 0.040 | | | | |
| Moles x$10^{-3}$ | 3.6254 | | | 6.8072 | | | 40.8648 | 55.7180 | | | 0.3487 | | | | |
| 4 | 20.0066 | | | 0.2281 | | | 20.4938 | 14.866 | 0.0274 | 0.0545 | 0.0129 | | | | V2A-35 |
| Wt % = | 35.92 | | | 0.41 | | | 36.80 | 26.69 | 0.05 | 0.098 | 0.0231 | | | | |
| Moles x$10^{-3}$ | 3.6197 | | | 1.6999 | | | 47.6600 | 56.6323 | | | 0.2119 | | | | |
| 5 | 20.0342 | | | 0.9136 | | | 13.1778 | 12.007 | 0.0230 | 0.0232 | 0.0161 | | | | P00035 |
| Wt % = | 43.35 | | | 1.98 | | | 28.52 | 25.99 | 0.05 | 0.05 | 0.035 | | | | |
| Moles x$10^{-3}$ | 3.6247 | | | 6.8087 | | | 30.6460 | 45.7409 | | | 0.2635 | | | | |
| 6 | 20.0291 | | | 0.8000 | | | 13.1858 | 11.618 | 0.0230 | 0.0227 | 0.0206 | | | | 327 |
| Wt % = | 43.83 | | | 1.75 | | | 28.85 | 25.42 | 0.05 | 0.05 | 0.045 | | | | |
| Moles x$10^{-3}$ | 3.6238 | | | 5.9621 | | | 30.6646 | 44.2590 | | | 0.3372 | | | | |
| 7 | 20.0492 | | | 0.6852 | | | 13.1836 | 11.267 | 0.0226 | 0.0228 | 0.0190 | | | | 328 |
| Wt % = | 44.30 | | | 1.51 | | | 29.13 | 24.89 | 0.05 | 0.05 | 0.042 | | | | |
| Moles x$10^{-3}$ | 3.6275 | | | 5.1065 | | | 30.6595 | 42.9219 | | | 0.3110 | | | | |
| 8 | 20.0095 | | | 0.5710 | | | 13.1773 | 10.934 | 0.0223 | 0.0225 | 0.0166 | | | | 329 |
| Wt % = | 44.71 | | | 1.27 | | | 29.44 | 24.43 | 0.05 | 0.05 | 0.037 | | | | |
| Moles x$10^{-3}$ | 3.6203 | | | 4.2554 | | | 30.6448 | 41.6533 | | | 0.2717 | | | | |
| 9 | 20.0440 | | | 0.4567 | | | 13.1830 | 10.603 | 0.0222 | 0.0221 | 0.0136 | 1.348 | | 28.00 | 330 |
| Wt % = | 45.20 | | | 1.03 | | | 29.73 | 23.91 | 0.05 | 0.05 | 0.030 | | | | |
| Moles x$10^{-3}$ | 3.6265 | | | 3.4036 | | | 30.6581 | 40.3923 | | | 0.2226 | | | | |
| 10 | 20.0387 | | | | 0.1826 | | 20.4993 | 14.2860 | 0.0262 | 0.0547 | 0.0158 | 1.044 | 62.0 | 26.47 | V2A-41 |
| Wt % = | 36.36 | | | | 0.33 | | 37.20 | 25.92 | 0.047 | 0.099 | 0.029 | | | | |
| Moles x$10^{-3}$ | 3.6256 | | | | 1.3610 | | 47.6727 | 54.4228 | | | 0.2586 | | | | |
| 11 | 20.0493 | | | | 0.1373 | | 20.4980 | 14.1250 | 0.0277 | 0.0549 | 0.0157 | 0.940 | 63.0 | 29.82 | V2A-42 |

Table 1.Examples of V1 &V2

| | | | | | | | | | | | | | | | |
|---|---|---|---|---|---|---|---|---|---|---|---|---|---|---|---|
| Wt % = | 36.51 | | | | 0.25 | | 37.33 | 25.72 | 0.05 | 0.10 | 0.028 | | | | |
| Moles x$10^{-3}$ | 3.6275 | | | | 1.0234 | | 47.6697 | 53.8095 | | | 0.2570 | | | | |
| 12 | 20.0228 | | | | 0.0914 | | 20.0228 | 14.0080 | 0.0274 | 0.0546 | 0.0159 | 0.894 | 63.5 | 30.84 | V2A-43 |
| Wt % = | | | | | | | | | | | | | | | |
| Moles x$10^{-3}$ | 3.6227 | | | | 0.6812 | | 46.5646 | 53.3638 | | | 0.2603 | | | | |
| 13 | | 10.01 | | 0.086 | | | 5.5412 | 4.5100 | 0.0100 | 0.0050 | | | 64.7 | | AR0055 |
| Wt % = | | 49.64 | | 0.43 | | | 27.48 | 22.37 | 0.05 | 0.025 | | | | | |
| Moles x$10^{-3}$ | | 2.9615 | | 0.6409 | | | 12.8865 | 17.1809 | | | | | | | |
| 14 | | | 80.090 | 0.331 | | | 21.320 | 18.750 | 0.0590 | 0.0240 | | | | | AR0028 |
| Wt % = | | | 66,42 | 0.27 | | | 17.68 | 15.55 | 0.049 | 0.02 | | | | | |
| Moles x$10^{-3}$ | | | 9.8937 | 2.4672 | | | 41.1162 | 71.4285 | | | | | | | |
| 15 | 20.0029 | | | | | 0.1391 | 19.0313 | 13.655 | 0 | 0.0526 | 0 | | | | V2A-49 |
| Wt % = | 37.83 | | | | | 0.26 | 35.99 | 25.82 | | 0.10 | | | | | |
| Moles x$10^{-3}$ | 3.6191 | | | | | | 44.2588 | 52.0190 | | | | | | | |

HT= Hexane triol ; TMP= Trimethylol propane; PER = Pentaerithritol ; PPG = polypropylene glycol ($M_n = 430$) ;PEG5527 = Poly(ethylene glycol) ( $M_n = 5527$) ;PEG 3380 = Poly(ethylene glycol) $M_n = 3380$ ; PEG 8095 = Poly(ethylene glycol) $M_n = 8095$ ; BHA = Butylated hydroxyanisole. EA = Ethanol amine; EWC = equilibrium water content ; Desmodur W = Dicyclohexylmethane-4,4'-diisocyanate.

Table 2. Examples for V3, V5D

| Composition | PEG 5931 (g) | TMP (g) | PPG (g) | EA (g) | Desmodur W (g) | BHA (g) | $FeCl_3$ (g) | Modulus (MPa) | EWC (%) | DK (Barrer) | Ocutec Ref. |
|---|---|---|---|---|---|---|---|---|---|---|---|
| 16 | 25.000 | 0.0571 | 12.8063 | 0.0221 | 3.7876 | 0.4167 | 0.0473 | 0.55 | 70.74 | | |
| Wt % = | 59.33 | 0.135 | 30.39 | 0.052 | 8.99 | 0.99 | 0.10 | | | | |
| Moles x$10^{-3}$ | 4.2151 | 0.4255 | 29.7820 | 0.3618 | 14.4289 | | | | | | |
| 17 | 20.000 | 0.0226 | 10.1500 | 0.0175 | 7.2230 | 0.3732 | 0.0373 | 0.84 | 69.00 | | V3A-20 |
| Wt % = | 52.87 | 0.059 | 26.83 | 0.046 | 19.09 | 0.98 | 0.10 | | | | |
| Moles x$10^{-3}$ | 3.3721 | 0.1684 | 23.6046 | 0.2865 | 27.5161 | | | | | | |
| 18 | 20.000 | 0.0452 | 10.1500 | 0.0176 | 7.2894 | 0.3741 | 0.0374 | 0.76 | 67.00 | 46.00 | V3A-32 |
| Wt % = | 52.75 | 0.119 | 26.77 | 0.046 | 19.22 | 0.98 | 0.10 | | | | |
| Moles x$10^{-3}$ | 3.3721 | 0.3368 | 23.6046 | 0.2881 | 27.7691 | | | | | | |
| 19 | 20.000 | 0.0905 | 10.1500 | 0.0175 | 7.4222 | 0.3758 | 0.0376 | 0.97 | 73,00 | | Batch72 |
| Wt % = | 52.50 | 0.237 | 26.64 | 0.046 | 19.48 | 0.99 | 0.10 | | | | |
| Moles x$10^{-3}$ | 3.3721 | 0.6744 | 23.6046 | 0.2865 | 28.2750 | | | | | | |
| 20 | 20.000 | 0.0452 | 7.2500 | 0.0178 | 13.4857 | 0.4139 | 0.0538 | 1.00 | | | 75 |
| Wt % = | 48.32 | 0.109 | 17.51 | 0.043 | 32.58 | 1.00 | 0.129 | | | | |
| Moles x$10^{-3}$ | | 0.3368 | | 0.2914 | | | | | | | |
| 21 | 20.000 | 0.0905 | 10.1500 | 0.0173 | 7.4228 | 0.3760 | 0.0375 | 0.85 | 81.00 | | V3A-5 |
| Wt % = | 52.50 | 0.237 | 26.64 | 0.045 | 19.48 | 0.99 | 0.10 | | | | |
| Moles x$10^{-3}$ | 3.3721 | 0.6744 | 23.6046 | 0.2832 | 28.2773 | | | | | | |
| 22 | 20.000 | 0.0906 | 14.5003 | 0.0179 | 10.0777 | 0.4450 | 0.0448 | 1.13 | 70.50 | | 73 |
| Wt % = | 44.27 | 0.200 | 32.09 | 0.039 | 22.30 | 0.99 | 0.10 | | | | |
| Moles x$10^{-3}$ | 3.3721 | 0.6744 | 33.7216 | 0.2930 | 38.3912 | | | | | | |
| 23 | 20.000 | 0.0907 | 17.4002 | 0.0174 | 11.8481 | 0.4926 | 0.0495 | 1.23 | 70.00 | | 74 |
| Wt % = | 40.08 | 0.181 | 34.87 | 0.035 | 23.02 | 0.98 | 0.10 | | | | |
| Moles x$10^{-3}$ | 3.3721 | 0.6744 | 40.4655 | 0.2848 | 45.1356 | | | | | | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3786034 A
- US 3821186 A
- US 4136250 A
- US 4454309 A
- US 4359553 A
- US 6930196 B
- US 4644033 A
- US 5932200 A
- US 4885966 A
- US 5175229 A
- US 2005209428 A
- WO 0200749 A
- WO 9833834 A
- WO 2011051690 A
- WO 2012056195 A
- US 4327203 A